**Europäisches Patentamt**

**European Patent Office**

**Office européen des brevets**

(19)

(11) Veröffentlichungsnummer: **0 150 484**
**B1**

(12) **EUROPÄISCHE PATENTSCHRIFT**

(45) Veröffentlichungstag der Patentschrift:
**01.06.88**

(21) Anmeldenummer: **84116189.6**

(22) Anmeldetag: **22.12.84**

(51) Int. Cl.⁴: **H 05 B 7/06,** F 27 D 11/10

(54) **Bodenelektrode für einen Gleichstromlichtbogenofen.**

(30) Priorität: **31.01.84 CH 445/84**

(43) Veröffentlichungstag der Anmeldung:
**07.08.85 Patentblatt 85/32**

(45) Bekanntmachung des Hinweises auf die Patenterteilung:
**01.06.88 Patentblatt 88/22**

(84) Benannte Vertragsstaaten:
**AT CH DE FR GB IT LI SE**

(56) Entgegenhaltungen:
**DE - C - 219 575**
**FR - A - 1 570 814**
**FR - A - 2 292 397**
**FR - A - 2 381 987**
**FR - A - 2 441 313**
**GB - A - 135 674**

(73) Patentinhaber: **BBC Brown Boveri AG, CH-5401 Baden (CH)**

(72) Erfinder: **Bühler, Karl, Oberdorfstrasse 28, CH-5415 Nussbaumen (CH)**

**Beschreibung**

Die Erfindung bezieht sich auf einen elektrischen Ofen nach dem Gattungsbegriff des Patentanspruchs 1. Ein derartiger Ofen ist beispielsweise aus der DE-PS 21 95 75 bekannt.

Die Fortschritte in der Entwicklung von Halbleiterbauelementen in den vergangenen Jahren waren Anlass dafür, Gleichstromlichtbogenöfen in zunehmendem Ausmass in der Eisen- und Stahlindustrie zur Erschmelzung, vornehmlich von Elektrostahl, einzusetzen.

Aufbau und Wirkungsweise von Gleichstromlichtbogenöfen sind beispielsweise aus der Zeitschrift «Stahl und Eisen», 103 (1983) Nr. 3, vom 14. Februar 1983, Seiten 133 bis 137 bekannt.

Zur Optimierung der elektrischen bzw. thermischen Verhältnisse hat es sich beim Gleichstromlichtbogenofen als vorteilhaft erwiesen, den Lichtbogen zwischen einer oder mehreren oberhalb des Schmelzgutes angeordneten Elektrode(n) und dem Schmelzgut selbst auszubilden. Für die Rückleitung des Gleichstromes ist mindestens eine im Boden des Ofens und mit der Schmelze in Berührung stehende Elektrode, die Bodenelektrode, vorgesehen. Die Bodenelektrode ist einer anhaltenden sehr hohen thermischen Beanspruchung ausgesetzt, für welche sich Materialien mit einem hohen Erweichungs- und Schmelzpunkt, beispielsweise Graphit, eignen. Bei Verwendung von Kohlenstoffelektroden wird aber die Schmelze einerseits aufgekohlt, was jedoch insbesondere bei der Herstellung von niedrig gekohlten Stühlen unerwünscht ist, andererseits wird die Kohlenstoffelektrode aufgezehrt, wodurch der Ofenboden geschwächt und die elektrische Leistungsübertragung ungünstig beeinflusst werden kann.

Nach dem Lösungsvorschlag der DE-PS 21 95 75 besteht die Bodenelektrode aus einem Bündel von Eisenstäben, welche an ihrem unteren Ende mit einer Platte, ebenfalls aus Eisen bestehend, verbunden sind. Über die Platte und die Eisenstäbe erfolgt die elektrische Stromzuführung in das aufzuschmelzende Gut bzw. in das Schmelzbad. Zwischen den Stäben und rings um das Stabbündel befindet sich ein fest eingestampfter und feuerfester Damm, der im vorliegenden Fall aus einem magnesitischen Baustoff besteht.

Durch das elektromagnetische Feld des durch das Schmelzbad von der Bodenelektrode zur oberen Elektrode fliessenden Stromes wird eine Badbewegung verursacht, die besonders stark an den Schmelzbadkontaktflächen der Bodenelektrode ist, d.h., an jenen Übergangsstellen, an denen der elektrische Strom von dem relativ kleinen Querschnitt der Bodenelektrode zu dem relativ grossen Querschnitt des Schmelzbades übertritt.

Die Schmelzbadströmung wirkt auf die Teilkontaktflächen ein, die nun unter Temperatureinfluss etwas hinter die Herdfläche zurückschmelzen, wodurch sich kleine Buchten, sogenannte Kolke ausbilden. Infolge der relativ grossen kinetischen Energie der Badströmung wird eine Querströmung (Sekundärströmung) in diesen Buchten angeregt. Dadurch werden die Teilkontaktflächen noch weiter abgeschmolzen. Das Abschmelzen der Eisenstäbe an ihrem, dem Schmelzbad zugewandten Ende, ist aber möglichst zu vermeiden oder wenigstens auf ein unschädliches Mass zu reduzieren, da die Kolke (örtliche Vertiefungen) nicht nur auf die Eisenstäbe beschränkt bleiben, sondern auch die angrenzenden Bereiche des feuerfesten Baustoffes erfassen, so dass kraterförmige Ausnehmungen entstehen. Beim Ausgiessen der flüssigen Charge aus dem Ofen werden die Koke nun ebenfalls entleert und es entstehen Hohlräume, die eine nachfolgende elektrische Kontaktierung fester, aufzuschmelzender Bestandteile erschweren. Die Stärke der Badbewegung ist selbstverständlich auch abhängig von der Stärke des elektromagnetischen Feldes. Dieses wird bei einer vorgegebenen Stromstärke umso schwächer, je länger die magnetischen Feldlinien sind, d.h. je grösser der Umfang bzw. der Durchmesser der Bodenelektrode ist.

Da die auf das Schmelzbad gerichteten Kräfte senkrecht zu den elektromagnetischen Feldlinien einwirken, bildet sich eine Badbewegung aus, die senkrecht zu den magnetischen Feldlinien, d.h. von aussen gegen die Achse der Bodenelektrode zugerichtet ist.

Gegenstand der GB-A-135 674 ist ein Wechselstrom-Lichtbogenofen mit über den Gefässboden verteilten Elektroden, die gruppenweise an die drei Phasen einer Drehstromquelle angeschlossen sind, mit dem Ziel einer innigen Vermischung der verschiedenen Schmelzzonen. Eine Erhöhung der Lebensdauer der Bodenelektrode ist durch diese bekannte Massnahme nicht möglich, weil diese gerade eine forcierte Badströmung zum Ziel haben.

Die Erfindung, wie sie in den Ansprüchen gekennzeichnet ist, löst die Aufgabe, einen elektrischen Ofen anzugeben, dessen Bodenelektrode eine hohe Lebensdauer aufweist.

Wesentliches Kennzeichen der Erfindung ist, dass sowohl der metallische, als auch der nichtmetallische Bestandteil der Schmelzbadkontaktfläche eine Länge im wesentlichen in Richtung des elektromagnetischen Feldes der stromdurchflossenen Bodenelektrode aufweisen, die grösser als deren Breite ist. Augenfälligster Vorteil ist dabei, dass in der Überhitzungsphase der Schmelzoperation die durch elektromagnetischen Kräfte hervorgerufene Schmelzbadbewegung daran gehindert wird, unmittelbar auf die metallischen Kontaktflächen der Bodenelektrode einzuwirken und die Wärme der überhitzten Schmelze an diese abzugeben. Der metallische Bestandteil der Schmelzbadkontaktfläche weicht zwar unter Temperatureinfluss etwas hinter deren nicht metallischen Bestandteil zurück, bleibt aber dann stationär. In der Schmelzbadkontaktfläche werden auf diese Weise zwei Zonen ausgebildet, und zwar einmal die Zone des dammartig vorstehenden nichtmetallischen, erst bei höheren Temperaturen schmelzenden Bestandteiles und die leicht zurückgeschmolzene Zone der elektrisch leitenden Kontaktfläche. Die erfindungsgemässe Anordnung der beiden Bestandteile der Schmelzbadkontaktfläche in Richtung des elektromagnetischen Feldes verhindert somit auch bei starker Überhitzung des Schmelzbades ein unkontrolliertes Abschmelzen des metallischen Teiles der Bodenelektrode in Richtung des Ofengefässbodens. Die Abschmelztiefe der metallischen Schmelzbadkontaktfläche kann, wie bereits erwähnt, über den ganzen Schmelzprozess nahezu konstant (stationär) gehalten werden, da die Einwirkung der Badströmung und der damit verbundene intensive Wärmeübergang vom Schmelzbad auf die metallische Kontaktfläche durch die Dämme des nichtmetallischen Bestandteiles und durch die relativ geringe Breite der metallischen Kontaktfläche im Verhältnis zu deren Länge stark herabgesetzt wird. Infolge der geringen Breite des Spaltes sind die Unterschiede der elektromagnetischen Feldstärke im Spalt klein. Dadurch ergeben sich entsprechend kleine, die Schmelzflüssigkeit im Spalt antreibende Kräfte. Die Temperatur des Schmelzbades im Spalt entspricht oben derjenigen des überhitzten Schmelzbades und ist unten, in der Nähe der Kontaktfläche, etwa gleich der Schmelztemperatur. Dieser Temperaturunterschied entspricht einem Unterschied in der spezifischen Dichte der Flüssigkeit, die oben leichter und unten schwerer ist. Dieser Dichteunterschied der Flüssigkeit im Spalt wirkt einer Bewegung der Schmelzflüssigkeit im Spalt ebenfalls entgegen.

Die Weiterbildung des Erfindungsgegenstandes gemäss Anspruch 2 sieht vor, entweder den metallischen Bestandteil der Schmelzbadkontaktfläche oder deren nichtmetallischen Bestandteil zumindest abschnittsweise hohlzylindrisch oder spiralförmig oder rechteckig oder mäanderförmig auszubilden und den nicht metallischen – bzw. den metallischen Bestandteil komplementär einzufügen, wobei der Anteil der Fläche des metallischen Bestandteiles 10 bis 70%, insbesondere 30 bis 60% der gesamten Schmelzbadkontaktfläche beträgt. Dadurch kann bei einer wirtschaftlichen Fertigung der Bodenelektrode eine flexible Anpassung an die jeweiligen Erfordernisse unterschiedlicher Lichtbogenofentypen hinsichtlich Leistungskenndaten und Haltbarkeit der Bodenelektrode erreicht werden.

Ein Vorteil der Ausgestaltung gemäss Anspruch 3 ist darin zu sehen, dass durch die Anordnung eines Zylinders aus einem Metall oder einem Nichtmetall innerhalb der hohlzylindrischen oder rechteckigen oder spiralförmigen oder mäanderförmigen Ausbildungen beider Elektrodenbestandteile den jeweiligen Betriebserfordernissen, einmal die Übertragung eines grossen elektrischen Stromes in das Schmelzbad oder zum anderen eine Verminderung der Badströmung infolge Vergrösserung des Umfanges bzw. des Durchmessers der Bodenelektrode, in geeigneter Weise nachgekommen werden kann.

Die Verstrebungen gemäss Anspruch 4 haben den Vorteil, dass sich die Dämme des nichtmetallischen Bestandteiles der Bodenelektrode bei zurückgeschmolzener metallischer Kontaktfläche gegenseitig abstützen können. Die verbesserte mechanische Stabilität wirkt sich insbesondere günstig bei Lichtbogenöfen mit grossen Leistungen aus, die eine starke Badbewegung in der Nähe der Schmelzbadkontaktfläche der Bodenelektrode aufweisen, sowie gegen mechanische Beschädigung kein Chargieren des Schmelzgutes.

Die Versetzung der Verstrebungen, sowohl in radialer als auch in Umfangsrichtung der Bodenelektrode nach Anspruch 5 bewirkt eine nochmalige Verbesserung der mechanischen Verstärkung des nichtmetallischen Bestandteiles der Bodenelektrode in ihrer Schmelzbadkontaktfläche. Im Falle, dass die metallischen Verstrebungen die metallischen Bestandteile der Schmelzbadkontaktfläche der Bodenelektrode verbinden, ist die Breite an dieser Stelle so gering, dass keine wesentliche Badbewegung an den zurückgeschmolzenen Kontaktflächen entsteht.

Die Wahl des Verhältnisses von der Breite des metallischen zur Breite des nichtmetallischen Bestandteiles der Bodenelektrode in ihrer Schmelzbadkontaktfläche entsprechend Anspruch 6 hat den Vorteil, dass einmal die elektrisch leitenden Kontaktflächen in schmale Zonen aufgeteilt werden können, die von der Schmelzbadströmung weitgehend unbeeinflusst bleiben, und zum anderen kann der Durchmesser bzw. der Umfang der Bodenelektrode gezielt auf eine vorausberechenbare Badströmung hin dimensioniert werden.

Gemäss Anspruch 7 weist der metallische Bestandteil der Bodenelektrode vorzugsweise dem Schmelzbad ähnliche chemische Gehalte auf und deren nichtmetallischer Bestandteil besteht aus einem handelsüblichen feuerfesten Baustoff. Dadurch wird sowohl eine wirtschaftliche Fertigung der Bodenelektrode, als auch ein kostengünstiger Lichtbogenofenbetrieb ermöglicht.

Die annähernd kegelstumpfförmige Ausbildung des Ofengefässbodens und die Wahl des Winkels von mindestens 20° zwischen der Kegelmantelfläche des Ofengefässbodens und der Schmelzbadkontaktfläche nach Anspruch 8, sowie die trompetenförmige Gestaltung des Ofengefässbodens gemäss Anspruch 9 und die Wahl des Krümmungsradius von mindestens 30% des Radius der Bodenelektrode in dem der Bodenelektrode angrenzenden Bereich entsprechend Anspruch 10 vermeidet einen abrupten Übergang des elektrischen Stromes und somit auch des elektromagnetischen Feldes von der Bodenelektrode in das Schmelzbad. Diese kontinuierliche Erweiterung des Ofengefässbodens vermindert die Schmelzbadbewegung, die auf die Schmelzbadkontaktfläche der Bodenelektrode einwirkt.

Die Erfindung wird nachstehend anhand von in der Zeichnung dargestellten Ausführungsbeispieles näher erläutert:

In der Zeichnung zeigt:

Fig. 1 einen Vertikalschnitt durch den Lichtbogenofen mit einer Bodenelektrode in schematischer Darstellung,

Fig. 2 eine Draufsicht auf die Bodenelektrode, und

Fig. 3 eine vergrösserte Darstellung eines Vertikalschnittes durch die Bodenelektrode gemäss Fig. 2.

Fig. 4a eine Draufsicht auf die Bodenelektrode in mäanderförmiger Ausbildung eines Elektrodenbestandteiles,

Fig. 4b eine Draufsicht auf die Bodenelektrode in rechteckiger Ausbildung eines Elektrodenbestandteiles,

Fig. 4c eine Draufsicht auf die Bodenelektrode in spiralförmiger Ausbildung beider Elektrodenbestandteile, und

Fig. 5a eine Draufsicht auf die Bodenelektrode gemäss Fig. 5b in schematischer Darstellung, und

Fig. 5b eine Seitenansicht der Bodenelektrode in schematischer Darstellung.

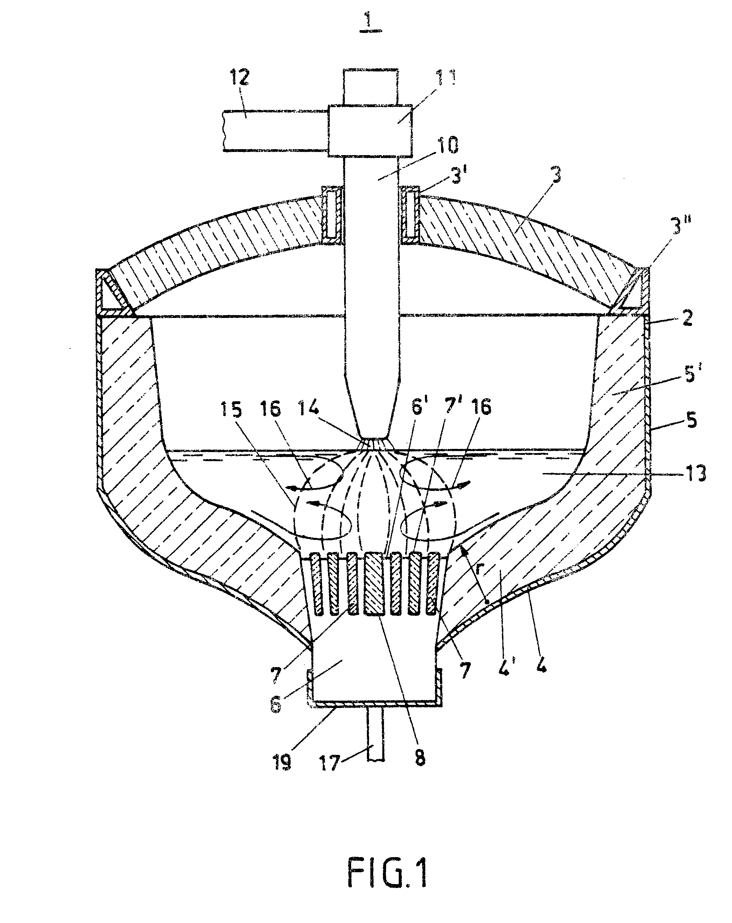

Fig. 1 zeigt den Lichtbogenofen 1 mit Ofengefäss 2 und Ofendeckel 3, wobei der Ofendeckel 3 sich mit dem Ofendeckelring 3'' auf dem Ofengefäss 2 abstützt. Das Ofengefäss 2 besteht aus dem Gefässboden 4 mitsamt der feuerfesten Auskleidung 4', sowie aus der Gefässwand 5 mitsamt der feuerfesten Auskleidung 5'. Oberhalb des Schmelzbades 13 ist eine Kohlenstoffelektrode 10 angeordnet, welche durch eine Öffnung des Ofendeckels 3 hindurchragt. Zur Kühlung der Elektrode 10 ist ein Kühlring 3' vorgesehen. Die Elektrode 10 ist in einer Halterung 11 eines Elektrodentragarmes 12 gehalten. Der Elektrodentragarm 12 ist mit einer in Fig. 1 nicht dargestellten Elektrodenreguliereinrichtung verbunden.

Im Ofengefässboden 4, 4' ist eine beispielsweise Ausführungsform der erfindungsgemässen Bodenelektrode 6 zu sehen, welche sich konisch zum Ofengefässinneren hin erweitert. Die Bodenelektrode 6 wird unterhalb des Ofengefässbodens 4 durch ein schematisch dargestelltes, als Kontakthülse ausgebildetes Anschlussstück 9 gehalten, welches gleichzeitig zur Verbindung der elektrischen Stromzuführung mittels der elektrischen Anschlussleitung 17 dient. In der Bodenelektrode 6 sind ihrem, dem Schmelzbad 13 zugewandten Teil, nichtmetallische Bestandteile 7, 8 als Einsätze in die Bodenelektrode 6 eingefügt, welche sich annähernd bis zur Hälfte der Bodenelektrode 6, in axialer Richtung betrachtet, erstrecken. Diese bestehen in der vorliegenden, in Fig. 1 dargestellten Ausführungsform, aus drei hohlzylindrischen Einsätzen 7 und einem zentralen Einsatz 8, wodurch die kreisringflächenartig ausgebildeten metallischen Bestandteile 6' der Schmelzbadkontaktfläche 6', 7' gegenseitig voneinander in schmale Zonen unterteilt werden. Die nichtmetallischen Bestandteile 7, 8 der Bodenelektrode 6 bestehen aus einem handelsüblichen feuerfesten Baustoff, beispielsweise Dolomit oder Magnesit.

In Fig. 1 sind die metallischen Bestandteile 6' der Bodenelektrode 6 etwas zurückgeschmolzen und die dammartig hervorstehenden und in das Schmelzbad 13 hineinragenden Einsätze 7, 8 sind gut erkennbar. Der zwischen der Spitze der oberen Elektrode 10 und der Oberfläche des Schmelzbades 13 gebildete Lichtbogen ist mit der Bezugsziffer 14 und die elektrischen Stromlinien mit der Bezugsziffer 15 bezeichnet. In Fig. 1 sind schematisch symmetrisch zur vertikalen Ofenachse verlaufende Teilströme der Schmelzbadbewegung dargestellt, die sowohl eine axiale als auch eine radiale Komponente aufweisen. Im zentralen Bereich des Schmelzbades 13 bildet sich zunächst einmal eine axiale Aufwärtsströmung von der Bodenelektrode 6 in Richtung zum Mittelbereich des Schmelzbades 13 und zum anderen eine axiale Abwärtsströmung von der Badoberfläche in Richtung zum Mittelbereich des Schmelzbades 13, aus. Die Strömung wird dort umgelenkt und richtet sich radial nach aussen gegen die Gefässwand 5, 5'. Nach abermaliger Umlenkung verläuft die Strömung wiederum radial zum Ofeninneren hin, streicht über die als Dämme wirkenden Einsätze 7, 8 hinweg, so dass die Schmelzbadkontaktflächen 6' weitgehend unberührt bleiben.

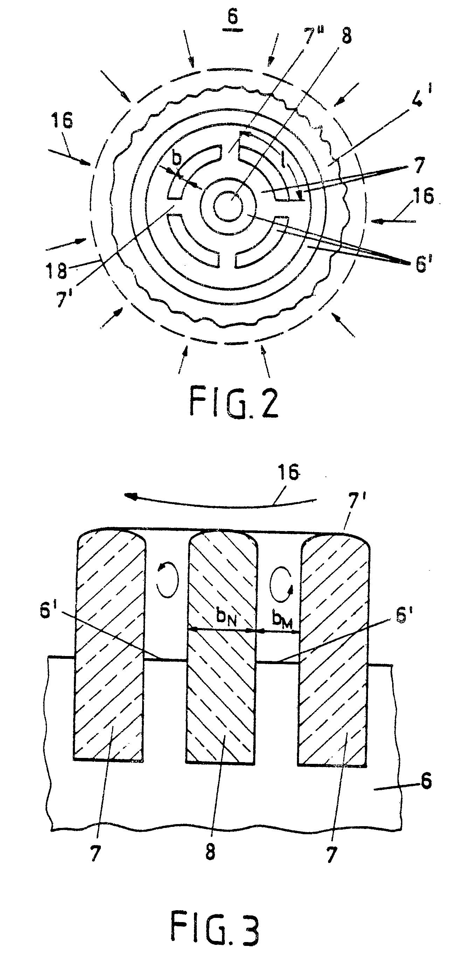

Fig. 2 zeigt in Draufsicht die Bodenelektrode 6, welche in die feuerfeste Auskleidung 4' des Ofengefässbodens 4 eingebaut ist. Die Bodenelektrode 6 weist in diesem Ausführungsbeispiel einen äusseren und einen inneren jeweils kreisringförmigen metallischen Bestandteil 6' der Schmelzbadkontaktfläche 6', 7' auf, die beide durch einen, als Damm dienenden feuerfesten Einsatz 7 voneinander getrennt sind. Der mittlere metallische Bestandteil 6' hingegen besteht aus vier kreisringförmigen Abschnitten. Diese werden gebildet, indem jeweils um 90° versetzte Durchbrüche die volle Kreisringfläche unterbrechen. In diesen Durchbrüchen befinden sich Verstrebungen 7', welche die beiden aus einem feuerfesten Baustoff bestehenden Einsätze 7 zu einem mechanisch festen Verbund vereinigen. Im Zentrum der Bodenelektrode 6 ist ein zentraler, aus feuerfestem Baustoff bestehender Einsatz 8 angeordnet. Die elektromagnetischen Feldlinien, welche um den äusseren Umfang der Bodenelektrode 6 herum verlaufen, sind durch die gestrichelte Linie mit der Bezugsziffer 18 angegeben. Senkrecht zu den Feldlinien 18 und in radialer Richtung zur Bodenelektrode 6 wirken die Kräfte, welche die Schmelzbadströmung verursachen. Sie sind durch die Pfeile mit der Bezugsziffer 16 schematisch dargestellt.

In Fig. 3 sind die metallischen Bestandteile 6' der Schmelzbadkontaktfläche 6', 7' sehr weit zurückgeschmolzen dargestellt. Es ist deutlich zu erkennen, dass die Schmelzbadbewegung entsprechend der Pfeilrichtung 16 über die als Dämme wirkenden Einsätze 7, 8 hinwegstreicht und die relativ schmalen kreisringförmigen Kontaktflächen 6' von der Schmelzbadbewegung 16 überhaupt nicht berührt werden. Lediglich im oberen Teil der durch die Einsätze 7, 8 gebildeten Spalten wirkt eine durch die kinetische Energie der Hauptströmung 16 angeregte Querströmung ein, die aber die Kontaktfläche 6' nicht berührt. Die Breite des nichtmetallischen Bestandteiles 7, 8 ist mit $b_N$ und diejenige des metallischen Bestandteiles 6' mit $b_M$ bezeichnet.

Die abschnittsweise unterbrochene hohlzylindrische Ausbildung der Dämme 7 bietet ausserdem den Vorteil, dass beim Ausleeren der Schmelze, wenn der Lichtbogenofen gekippt wird, flüssige Anteile der Schmelze zwischen den Dämmen 7 verbleiben und dort wieder erstarren.

Würden nämlich die flüssigen Anteile der Kontaktflächen 6' zwischen den Dämmen 7, 8 beim Ausleeren des Ofens mitausgegossen, so wäre das für den nachfolgenden Schmelzvorgang problematisch, und zwar aus folgenden Gründen: Die relativ spröden Dämme 7, 8, wären in ihrem dem Schmelzbad 13 zugewandten Teil lediglich durch die Verstrebungen 7' gehalten und der metallisch stützende Teil der Kontaktflächen würde entfallen. Dies birgt die Gefahr einer Zerstörung der oberen Teile der Dämme 7, 8 beim nachfolgenden Chargiervorgang in sich. Darüber hinaus wäre eine einwandfreie elektrische Kontaktierung zwischen den Kontaktflächen 6' und dem festen Chargiergut bei Beginn eines erneuten Schmelzvorganges infrage gestellt.

Es ist selbstverständlich, dass eine beliebige Anzahl von Dämmen 7, 8 innerhalb der Bodenelektrode 6 angeordnet sein können. Dadurch wird bei einer vorgegebenen Stromstärke und dem damit festgelegten elektrisch leitenden Teil der Bodenelektrode 6 deren Umfang bzw. deren Durchmesser vergrössert. Je grösser aber nun der Umfang der Bodenelektrode 6 ist, umso länger werden die elektromagnetischen Feldlinien 18 und umso stärker wird die Bewegung des Schmelzbades 13 reduziert.

Die Einfügung von elektrisch nichtleitenden Dämmen 7, 8 in die Bodenelektrode 6 bewirkt bei gleichbleibendem leitenden Querschnitt der metallischen Kontaktfläche 6' einmal eine Herabsetzung der Schmelzbadströmung und zum anderen werden die Kontaktflächen 6' durch die Dämme 7, 8 vor unerwünschter Schmelzbadbewegung geschützt. Bei der zurückgeschmolzenen Kontaktfläche ist die Ausbildung einer Badströmung im Spalt durch dessen Enge zwischen zwei Dämmen behindert. Wegen der geringen Ausdehnung des Spaltes sind die Unterschiede der magnetischen Feldstärke im Spalt gering. Dadurch ergeben sich entsprechend geringere die Flüssigkeit antreibende Kräfte. Die Temperatur der Schmelze im Spalt entspricht oben derjenigen des überhitzten Bades und ist unten in der Nähe der Kontaktfläche etwa gleich der Schmelztemperatur. Dieser Unterschied bedeutet einen Unterschied der Dichte der Flüssigkeit, die oben leichter und unten schwerer ist. Diese Schichtung wirkt einer Bewegung (Umwälzung) der Schmelze entgegen.

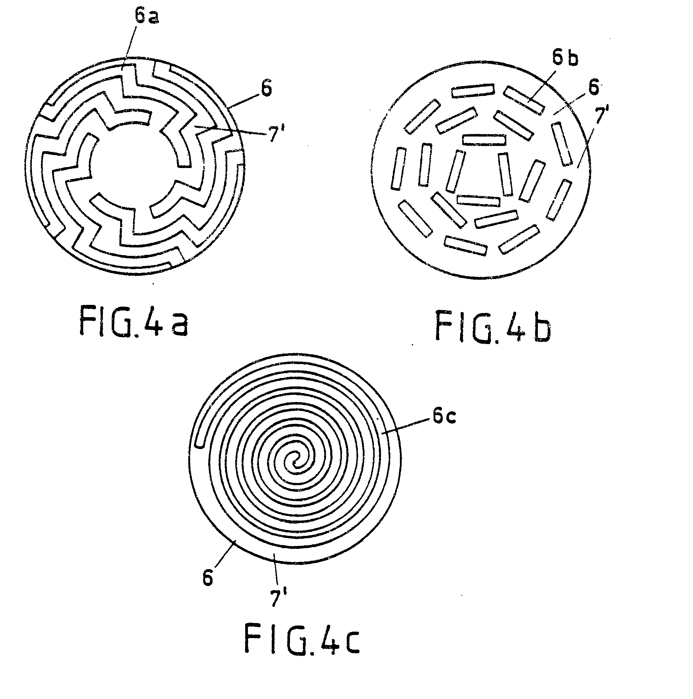

In Fig. 4a bis c sind weitere Aubildungsformen des metallischen Bestandteiles 6' der Schmelzbadkontaktfläche 6', 7' der Bodenelektrode 6 dargestellt. Fig. 4a zeigt eine mäanderförmige 6a, Fig. 4b eine rechteckige 6b und Fig. 4c eine spiralförmige Ausbildung 6c des metallischen Teiles 6' der Schmelzbadkontaktfläche 6', 7', wobei jeweils komplementär dazu die nichtmetallischen, feuerfesten Bestandteile 7' eingefügt sind. Auf diese Weise ist die Bodenelektrode 6 zu einem einheitlichen Ganzen zusammengesetzt. Die Bestandteile 6', 7' der Bodenelektrode 6 können sich über die gesamte axiale Länge der Bodenelektrode 6 erstrecken. Um die elektrische Stromzuführung in die Bodenelektrode 6 in jedem Fall sicherzustellen, ist der metallische Bestandteil 6' der Bodenelektrode 6 im Bereich des elektrischen Anschlussstückes 9 über deren gesamten Durchmesser vorzugsweise kompakt ausgebildet.

Die geometrische Ausbildung der metallischen 6' bzw. nichtmetallischen Bestandteile 7' bleiben nicht auf die in den vorstehend gezeigten Ausführungsbeispielen beschränkt und es sind beliebig viele geometrische Formen denkbar.

Von Bedeutung ist, dass bei einer gegebenen elektrischen Anschlussleistung des Lichtbogenofens, einmal der Querschnitt der Bodenelektrode(n) 6 möglichst gross gewählt wird, und dass zum anderen die Elektrodenbestandteile 6', 7' in Richtung der elektrischen Feldlinien verlaufen, d.h. in Umfangsrichtung der Bodenelektrode 6, wobei die Länge der Elektrodenbestandteile 6', 7' im Verhältnis zu deren Breite gross sein soll.

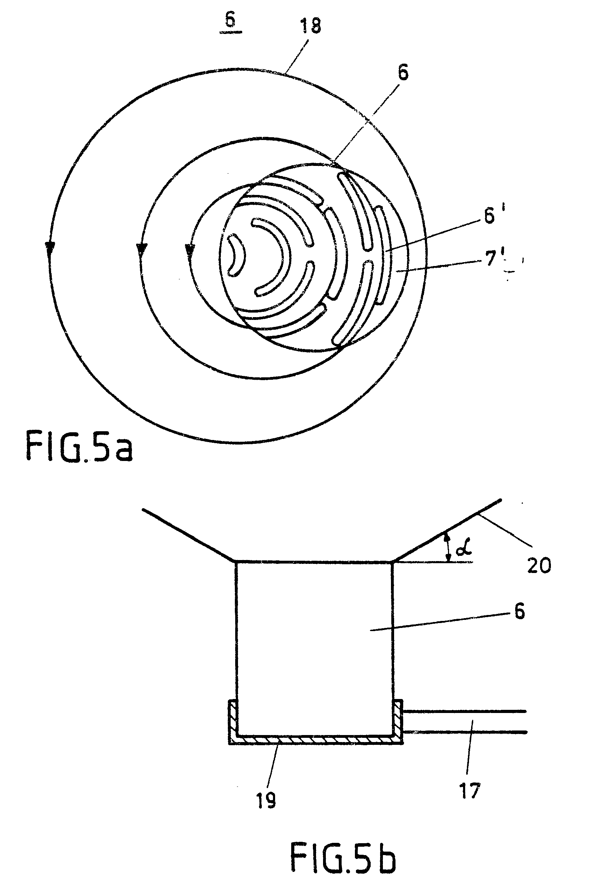

In Fig. 5a und 5b ist ein Ausführungsbeispiel dargestellt, bei dem sowohl die metallischen 6', als auch die nichtmetallischen Bestandteile 7' der Bodenelektrode 6 dem, in bezug auf die Achse der Bodenelektrode 6 nichtkonzentrischen Verlauf der magnetischen Feldlinien 18, angepasst sind. Diese Nichtkonzentrizität der magnetischen Feldlinien 18 wird hervorgerufen durch den relativ hohen elektrischen Strom, welcher durch die elektrische Anschlussleitung 17 über die Kontakthülse 19 seitlich der Bodenelektrode 6 zugeführt wird. Das daraus resultierende magnetische Feld verschiebt nun das elektromagnetische Feld in der Bodenelektrode 6 in die entgegengesetzte Richtung zur elektrischen Anschlussleitung 17. Die metallischen 6' und die nichtmetallischen Bestandteile 7' sind gemäss Fig. 5a abschnittsweise hohlzylindrisch ausgebildet und dem magnetischen Feld angepasst. Daraus ergibt sich eine asymmetrische Aufteilung der Bestandteile 6', 7' im Querschnitt der Bodenelektrode 6', wie sie in Fig. 5a zu erkennen ist.

In Fig. 5b ist schematisch dargestellt, dass die Herdfläche 20 konisch ausgebildet ist, wobei der Winkel $\alpha$ zwischen der Herdfläche 20 und der Schmelzbadkontaktfläche 6', 7' mindestens 20° beträgt.

In Fig. 1 und 5b sind das Ofengefäss 4, 4'; 5, 5' und der Ofenherd 20 rotationssymmetrisch dargestellt. Es ist jedoch ebenfalls denkbar, dass die genannten Teile 4, 4'; 5, 5'; 20 nicht rotationssymmetrisch ausgebildet sind. Ebenfalls bleibt die vorliegende Erfindung nicht nur auf zylindrisch ausgebildete Bodenelektroden 6 beschränkt. Es können ebenfalls ellipsenförmige, quadratische, rechteckige oder polygonale Querschnittsformen verwendet werden. Ebenso können eine oder mehrere Bodenelektroden 6 hohlzylindrisch oder zumindest abschnittsweise hohlzylindrisch ausgebildet sein.

Ausserdem ist es selbstverständlich, dass eine beliebige Anzahl von Bodenelektroden 6 in den Ofengefässboden 4, 4', und zwar an jeden beliebigen Ort im Ofengefässboden 4, 4' eingebaut werden können.

## Patentansprüche

1. Gleichstromlichtbogenofen zum Schmelzen von Metallen, mit mindestens einer Bodenelektrode (6), welche im Ofengefässboden (4) angeordnet ist, wobei die Bodenelektrode an ihrem dem Schmelzbad zugewandten Ende einen metallischen (6') und einen nichtmetallischen Elektrodenbestandteil (7') aufweist, dadurch gekennzeichnet, dass der metallische Elektrodenbestandteil (6') zumindest in seinem dem Schmelzbad (13) zugewandten Teil relativ schmale Kontaktflächen (6') aufweist, deren in Umfangsrichtung gemessene Länge grösser ist als deren in Radialrichtung gemessene Breite und dass die Kontaktflächen in ihrer Längsrichtung im wesentlichen dem Verlauf der Feldlinien folgen, dass die einzelnen metallischen Elektrodenbestandteile (6') in Radialrichtung voneinander beabstandet sind und der Zwischenraum zwischen besagten metallischen Elektrodenbestandteilen mit dem nichtmetallischen, aus einem Feuerfestmaterial bestehenden Elektrodenbestandteil (7') im wesentlichen ausgefüllt ist.

2. Gleichstromlichtbogenofen nach Anspruch 1, dadurch gekennzeichnet, dass der metallische Elektrodenbestandteil (6') zumindest abschnittsweise hohlzylindrisch oder mäanderförmig (6a) oder rechteckig (6b) oder spiralförmig (6c) ausgebildet ist und deren nichtmetallischer Bestandteil (7') komplementär eingefügt ist oder dass der nichtmetallische Elektrodenbestandteil (7') zumindest abschnittsweise hohlzylindrisch oder mäanderförmig (6a) oder rechteckig (6b) oder spiralförmig (6c) ausgebildet ist und deren metallischer Bestandteil (6') komplementär eingefügt ist, und dass der Anteil der Fläche des metallischen Bestandteiles (6') 10 bis 70%, insbesondere 30 bis 60% der gesamten Schmelzbadkontaktfläche (6', 7') beträgt (Fig. 2, 4a bis c, 5a).

3. Gleichstromlichtbogenofen nach Anspruch 2, dadurch gekennzeichnet, dass innerhalb den hohlzylindrischen oder mäanderförmigen (6a) oder rechteckigen (6b) oder spiralförmigen Ausbildungen (6c) beider Elektrodenbestandteile (6', 7') ein Zylinder (7) vorgesehen ist, welcher aus einem Metall oder aus einem Nichtmetall besteht (Fig. 3).

4. Gleichstromlichtbogenofen nach einem der vorhergehenden Ansprüche, dadurch gekennzeichnet, dass jeweils zwei an einen metallischen Elektrodenbestandteil (6') angrenzende nichtmetallische Elektrodenbestandteile (7') durch nichtmetallische Verstrebungen (7'') gegenseitig miteinander verbunden sind (Fig. 2).

5. Gleichstromlichtbogenofen nach Anspruch 4, dadurch gekennzeichnet, dass die Verstrebungen (7'') in radialer und in Umfangsrichtung der Bodenelektrode (6) versetzt zueinander angeordnet sind (Fig. 5a).

6. Gleichstromlichtbogenofen nach einem der vorhergehenden Ansprüche, dadurch gekennzeichnet, dass das Verhältnis der Breite des metallischen $b_M$ zur Breite des nichtmetallischen Bestandteiles $b_N$ (7') der Bodenelektrode (6) in ihrer Schmelzbadkontaktfläche (6', 7') im Bereich von 2:1 bis 1:5, vorzugsweise 1:2, gewählt ist (Fig. 3).

7. Gleichstromlichtbogenofen nach mindestens einem der Ansprüche 1 bis 6, dadurch gekennzeichnet, dass der metallische Bestandteil (6') der Bodenelektrode (6) in der Schmelzbadkontaktfläche (6', 7') vorzugsweise dem Schmelzbad (13) ähnliche chemische Gehalte aufweist und deren nichtmetallischer Bestandteil (7') aus einem handelsüblichen feuerfesten Baustoff besteht, der gegenüber dem metallischen Bestandteil (6') eine geringere elektrische Leitfähigkeit und einen höheren Schmelzpunkt aufweist.

8. Elektrischer Ofen nach einem der vorhergehenden Ansprüche, dadurch gekennzeichnet, dass die Herdfläche (20) wenigstens annähernd kegelstumpfförmig ausgebildet ist, und dass die Kegelmantelfläche mit der Schmelzbadkontaktfläche (6', 7') einen Winkel $\alpha$ von mindestens 20° einschliesst (Fig. 5b).

9. Elektrischer Ofen nach einem der Ansprüche 1 bis 7, dadurch gekennzeichnet, dass die Herdfläche (20) trompetenförmig gestaltet ist, und sich zunächst wenig und dann stärker erweitert (Fig. 1).

10. Elektrischer Ofen nach Anspruch 9, dadurch gekennzeichnet, dass die Erweiterung in dem der Bodenelektrode (6) angrenzenden Bereich derart gewählt ist, dass deren Krümmungsradius mindestens 30% des Radius der Bodenelektrode (6) beträgt.

## Revendications

1. Un four à arc de courant continu, pour la fusion de métaux, avec au moins une électrode du fond (6), qui est disposée dans le fond d'enveloppe de four (4), l'électrode du fond étant munie, à son extrémité faisant face au bain de fusion, d'une pièce constitutive d'électrode métallique (6') et d'une non métallique (7'), caractérisé en ce que la pièce constitutive d'électrode métallique (6') possède, au moins dans sa partie faisant face au bain de fusion (13), des zones de contact relativement étroites (6'), dont la longueur, mesurée dans une direction circonférentielle, est plus grande que leur largeur, mesurée dans une direction radiale, et en ce que les zones de contact suivent essentiellement dans leur direction longitudinale le tracé des lignes de flux, en ce que les pièces constitutives d'électrode métalliques (6') individuelles sont écartées les unes des autres dans la direction radiale et l'intervalle intermédiaire entre lesdites pièces constitutives d'électrode métalliques est rempli essentiellement par la pièce constitutive d'électrode non métallique (7'), composée d'un matériau réfractaire.

2. Un four à arc de courant continu selon la revendication 1, caractérisé en ce que la pièce constitutive d'électrode métallique (6') a une construction, au moins en section transversale, cylindrique creuse ou en forme de méandre (6a) ou rectangulaire (6b) ou en forme de spirale (6c) et sa pièce constitutive non métallique (7') est adaptée de façon complémentaire, ou en ce que la pièce constitutive d'électrode non métallique (7') a une construction, au moins en section transversale, cylindrique creuse ou en forme de méandre (6a) ou rectangulaire (6b) ou en forme de spirale (6c) et sa pièce constitutive métallique (6') est adaptée de façon complémentaire, et en ce que la proportion de la surface de la pièce constitutive métallique (6') est entre 10 et 70%, en particulier entre 30 et 60%, par rapport à la zone totale de contact avec le bain de fusion (6', 7') (figures 2, 4a à c, 5a).

3. Un four à arc de courant continu selon la revendication 2, caractérisé en ce que l'on fournit un cylindre (7) qui est composé d'un métal et d'un non métal (figure 3), dans les constructions cylindriques creuses ou en forme de méandre (6a) ou rectangulaires (6b) ou en forme de spirale (6c) des deux pièces constitutives d'électrode (6', 7').

4. Un four à arc de courant continu selon l'une des revendications précédentes, caractérisé en ce que des paires de pièces constitutives d'électrode non métalliques (7') qui sont avoisinantes d'une pièce constitutive d'électrode métallique (6') sont reliées mutuellement les unes aux autres par des barrettes non métalliques (7'') (figure 2).

5. Un four à arc de courant continu selon la revendication 4, caractérisé en ce que les barrettes (7'') sont disposées en décalage mutuel en direction radiale et en direction circonférentielle de l'électrode du fond (6) (figure 5a).

6. Un four à arc de courant continu selon l'une des revendications précédentes, caractérisé en ce que le rapport de la largeur de la partie constitutive métallique $b_M$ et de celle non métallique $b_N$ (7') de l'électrode du fond (6) dans sa zone de contact avec le bain de fusion (6', 7') est choisi dans une plage entre 2:1 et 1:5, de préférence 1:2 (figure 3).

7. Un four à arc de courant continu selon l'une au moins des revendications 1 à 6, caractérisé en ce que la pièce constitutive métallique (6') de l'électrode du fond (6) dans la zone de contact avec le bain de fusion (6', 7') possède de préférence une teneur chimique similaire à celle du bain de fusion (13), et sa pièce constitutive non métallique (7') se compose d'un matériau de construction réfractaire disponible dans le commerce qui possède une conductivité électrique plus faible et un point de fusion plus élevé que ceux de la pièce constitutive métallique (6').

8. Un four électrique selon l'une des revendications précédentes, caractérisé en ce que la surface de la sole (20) est conçue au moins approximativement de forme tronconique, et en ce que la surface conique forme avec la zone de contact avec le bain de fusion (6', 7') un angle α d'au moins 20° (figure 5b).

9. Un four électrique selon l'une des revendications 1 à 7, caractérisé en ce que la surface de la sole (20) est construite en forme de trompette et s'élargit d'abord un petit peu et ensuite encore plus (figure 1).

10. Un four électrique selon la revendication 9, caractérisé en ce que l'élargissement dans la zone avoisinante à l'électrode du fond (6) est choisi de façon à ce que son rayon de courbure soit d'au moins 30% par rapport au rayon de l'électrode du fond (6).

## Claims

1. Direct-current arc furnace for the melting of metals, with at least one bottom electrode (6), which is arranged in the furnace casing bottom (4), the bottom electrode having at its end facing the melting bath a metallic (6') and a non-metallic electrode component part (7'), characterized in that the metallic electrode component part (6') has, at least in its part facing the melting bath (13) relatively narrow contact surfaces (6'), the length of which, measured in circumferential direction, is greater than their width, measured in radial direction, and in that the contact surfaces substantially follow in their longitudinal direction the course of the lines of flux, in that the individual metallic electrode component parts (6') are spaced apart in radial direction and the intermediate space between the said metallic electrode component parts is substantially filled by the non-metallic electrode component part (7'), consisting of a refractory material.

2. Direct-current arc furnace according to Claim 1, characterized in that the metallic electrode component part (6') is designed, at least sectionally, hollow-cylindrical or meander-shaped (6a) or rectangular (6b) or spiral-shaped (6c) and its non-metallic component part (7') is fitted complementarily or in that the non-metallic electrode component part (7') is designed, at least sectionally, hollow-cylindrical or meander-shaped (6a) or rectangular (6b) or spiral-shaped (6c) and its metallic component part (6') is fitted complementarily, and in that the proportion of the area of the metallic component part (6') is 10 to 70%, in particular 30 to 60% of the total melting bath contact surface (6', 7') (Figs. 2, 4a to c, 5a).

3. Direct-current arc furnace according to Claim 2, characterized in that a cylinder (7) which consists of a metal or a non-metal (Fig. 3) is provided within the hollow-cylindrical or meander-shaped (6a) or rectangular (6b) or spiral-shaped designs (6c) of both electrode component parts (6', 7').

4. Direct-current arc furnace according to one of the preceding claims, characterized in that pairs of non-metallic electrode component parts (7') adjoining a metallic electrode component part (6') are mutually connected to each other by non-metallic stays (7'') (Fig. 2).

5. Direct-current arc furnace according to Claim 4, characterized in that the stays (7'') are arranged mutually offset in radial and in circumferential direction of the bottom electrode (6) (Fig. 5a).

6. Direct-current arc furnace according to one of the preceding claims, characterized in that the ratio of the width of the metallic $b_M$ to the width of the non-metallic component part $b_N$ (7') of the bottom electrode (6) in its melting bath contact surface (6', 7') is chosen in the range from 2:1 to 1:5, preferably 1:2 (Fig. 3).

7. Direct-current arc furnace according to at least one of Claims 1 to 6, characterized in that the metallic component part (6') of the bottom electrode (6) in the melting bath contact surface (6', 7') preferably has similar chemical contents to the melting bath (13), and its non-metallic component part (7') consists of a commercially available refractory building material which has a lower electrical conductivity and a higher melting point than the metallic component part (6').

8. Electric furnace according to one of the preceding claims, characterized in that the hearth area (20) is designed at least approximately frustoconical, and in that the conical surface forms with the melting bath contact surface (6', 7') an angle $\alpha$ of at least 20° (Fig. 5b).

9. Electric furnace according to one of Claims 1 to 7, characterized in that the hearth area (20) is made trumpet-shaped and widens first a little and then more so (Fig. 1).

10. Electric furnace according to Claim 9, characterized in that the widening in the region adjoining the bottom electrode (6) is chosen such that its radius of curvature is at least 30% of the radius of the bottom electrode (6).

FIG.1

FIG.2

FIG.3

FIG.4a

FIG.4b

FIG.4c

**FIG.5a**

**FIG.5b**